# EUROPEAN PATENT APPLICATION

(11) **EP 1 469 544 A1**
(43) Date of publication of application: **20.10.2004**
(21) Application number: 04007956.8
(22) Date of filing: 01.04.2004
(51) Int. Cl.: H01M 8/06, H01M 8/04

(54) **Method of operating a fuel cell, air purifying apparatus and fuel cell**

(30) Priority: 11.04.2003 JP 2003108150
(71) Applicant: MATSUSHITA ELECTRIC INDUSTRIAL CO., LTD., Kadoma-shi, Osaka 571-8501 (JP)
(72) Inventor: Takebe, Yasuo, Uji-shi, Kyoto 611-0002 (JP); Uchida, Makoto, Hirakata-shi, Osaka 573-1145 (JP); Hatoh, Kazuhito, Osaka-shi, Osaka 536-0015 (JP)
(74) Representative: Patentanwälte Leinweber & Zimmermann

(57) **Abstract**

An air purifying apparatus for a fuel cell is provided on a flow route of air supplied to the fuel cell. The air purifying apparatus includes a first pollutant-removing means that oxidizes a pollutant in the air and a second pollutant-removing means that adsorbs and removes the pollutant. The first pollutant-removing means includes a catalyst that oxidizes the pollutant by means of oxygen in the air, and the catalyst has an oxidizing activity with respect to at least one selected from the group consisting of organic substances, nitrogen oxides, sulfur oxides, ammonia, hydrogen sulfide, and carbon monoxide. The first pollutant-removing means may include an ozone generator. The second pollutant-removing means adsorbs and removes the pollutant by means of a porous material carrying at least one selected from the group consisting of permanganates, alkali salts, alkaline hydroxides, and alkaline oxides.

## Description

### BACKGROUND OF THE INVENTION

The present invention relates to fuel cells that use air, which contains pollutants, as a reactant gas. More particularly, the present invention relates to air purifying apparatuses that remove the pollutants, thereby enabling fuel cells to maintain high output voltage over an extended period of time.

Fuel cells generate electric power by reacting a fuel gas supplied to a fuel electrode with an oxygen-containing gas supplied to an oxidant electrode serving as a cathode. As the fuel gas, hydrogen supplied from a hydrogen cylinder, or a reformed gas obtained by reforming city gas to a gas of high hydrogen content, is used. As the oxygen-containing gas, air is generally supplied by a compressor or a blower.

With low-temperature-type fuel cells, such as solid polymer electrolyte fuel cells and phosphoric acid fuel cells, their electrodes conventionally include a conductive carbon powder that carries on its surface a catalyst of noble metal, such as platinum. Air supplied to fuel cells contains trace amounts of air pollutants, such as nitrogen oxides (NO, NOₓ), sulfur oxides (SOₓ), ammonia, hydrogen sulfide, organic substances such as the steam of organic solvents and tar, and carbon monoxide (CO). These pollutants are also detrimental to the platinum catalyst of such a fuel cell. If polluted air sucked by the air supply system of a fuel cell is directly supplied to the oxidant electrode, the platinum catalyst is poisoned by the air pollutants, so that the activity of the platinum catalyst gradually deteriorates, thereby leading to a decrease in output voltage.

Therefore, attempts have been made to pass the air to be supplied to a fuel cell through a filter of activated carbon or the like, in order to reduce the pollutants. There is also a proposal of using a three-way catalyst container to reduce the pollutants (Japanese Laid-Open Patent Publication No. Hei 9-180744).

However, activated carbon and three-way catalysts have a low ability to adsorb pollutants. Thus, when activated carbon and three-way catalysts are used as filters, it is necessary to keep the space velocity of gas sufficiently slow, in order that they are able to fully exert their ability to remove pollutants. Specifically, large amounts of activated carbon or a three-way catalyst become necessary, and the pressure loss at the filter increases, thereby resulting in an increase in power consumption of a compressor or a blower. There is also a problem of the filter getting clogged with solid or oily matter, such as tar, and having to be replaced often. In this way, at present, there are no adsorbents having sufficient ability to remove all the pollutants that poison the platinum catalyst.

The present invention solves these problems, and an object of the present invention is to efficiently remove most of the pollutants that may invite a decrease in output voltage of the fuel cell, thereby enabling the fuel cell to maintain high output voltage for an extended period of time.

### BRIEF SUMMARY OF THE INVENTION

According to the invention the above object is achieved by a method according to claims 1, 2, by an air purifying apparatus for a fuel cell according to claims 3 to 8, and by a fuel cell according to claims 9 to 22, respectively.

Particularly, an air purifying apparatus for a fuel cell in accordance with the present invention is provided on a flow route of air supplied to the fuel cell. The air purifying apparatus includes a first pollutant-removing means that oxidizes a pollutant in the air and a second pollutant-removing means that adsorbs and/or removes the pollutant.

The first pollutant-removing means preferably includes an oxidizing catalyst. Specifically, the first pollutant-removing means includes a catalyst that oxidizes the pollutant by means of oxygen in the air, and the catalyst has an oxidizing activity with respect to at least one selected from the group consisting of organic substances, nitrogen oxides, sulfur oxides, ammonia, hydrogen sulfide, and carbon monoxide.

The first pollutant-removing means may include an ozone generator that generates ozone, and the pollutant is oxidized by the ozone generated by the ozone generator.

It is preferable that the second pollutant-removing means adsorb and remove the pollutant by means of a porous material carrying at least one selected from the group consisting of permanganates, alkali salts, alkaline hydroxides, and alkaline oxides.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a block diagram of a fuel cell equipped with an air purifying apparatus in Embodiment 1 of the present invention;
FIG. 2 is a block diagram of a fuel cell equipped with an air purifying apparatus in Embodiment 2 of the present invention;
FIG. 3 is a block diagram of a fuel cell equipped with a modified air purifying apparatus in Embodiment 2 of the present invention;
FIG.4 is a block diagram of an air purifying apparatus in Embodiment 3 of the present invention;
FIG. 5 is a longitudinal sectional view showing a schematic configuration of a pollutant-removing means of the air purifying apparatus in Embodiment 3 of the present invention;
FIG. 6 is a block diagram of a fuel cell equipped with an air purifying apparatus in Embodiment 4 of the present invention;
FIG. 7 is a block diagram of a fuel cell equipped with an air purifying apparatus in Embodiment 5 of the present invention;
FIG. 8 is a graph showing the changes with time in output voltages of fuel cells in Examples 1, 3 and 4 of the present invention and Comparative Examples 1 and 2; and
FIG. 9 is a graph showing the changes with time in output voltages of fuel cells in Examples 5 and 6 of the present invention.

### DETAILED DESCRIPTION OF THE INVENTION

The present invention can remove pollutants in air efficiently and suppress a decrease in output voltage of a fuel cell caused by the pollutants in air that is supplied to the fuel cell.

A fuel cell is formed of an electrolyte layer and electrodes provided on both sides of the electrolyte layer. The electrodes used in the fuel cell are composed of a gas diffusion layer, which supplies a reactant gas, and a catalyst layer, which causes chemical reactions. The catalyst layer is made of a carbon powder carrying a catalyst of noble metal, such as platinum.

The fuel cell generates electric power by reacting a fuel gas supplied to the fuel electrode (serving as an anode) with an oxygen-containing gas supplied to the oxidant electrode (serving as a cathode). As the oxygen-containing gas, air is generally supplied by a compressor or a blower. However, air contains trace amounts of pollutants that poison the noble metal catalyst of the catalyst layer.

There are various pollutants, such as nitrogen oxides (NO, NOₓ), sulfur oxides (SOₓ), ammonia, hydrogen sulfide, organic substances such as the steam of organic solvents and tar, and carbon monoxide (CO). Nitrogen oxides and sulfur oxides occur naturally in nature and also exist in exhaust gases from automobiles and factories. Ammonia and hydrogen sulfide come from septic tanks and sludge. Organic solvents result from coatings and construction materials, while tar, CO, and other organic substances are included in exhaust gases from automobiles and factories. Further, volcanic eruptions contain sulfur oxides, hydrogen sulfide, and CO.

These pollutants gradually accumulate on the catalyst surface during the operation of the fuel cell, causing a deterioration in output voltage. Therefore, it becomes necessary to supply the fuel cell with air from which such pollutants are removed. It is desirable to reduce the pollutant level down to the order of ppb (parts per billion), with respect to low-temperature-type fuel cells, such as solid polymer electrolyte fuel cells and phosphoric acid fuel cells.
However, it is difficult to efficiently remove all of the various pollutants. It is particularly difficult to remove NO, using conventional adsorbents, since the chemical activity of NO is low.

An air purifying apparatus of the present invention includes a first pollutant-removing means that oxidizes a pollutant in the air and a second pollutant-removing means that adsorbs and removes the pollutant. It is preferable that the first pollutant-removing means include a means for heating the first pollutant-removing means. As the heating means, a heater may be used. More preferably, the waste heat from a reformer or a fuel cell may be used as the heating means.

In a preferable embodiment of the present invention, the air purifying apparatus uses an ozone generating means as the first pollutant-removing means, and the pollutant is oxidized by the ozone generated by the ozone generating means. The ozone-generating means is preferably a means that generates ozone by high voltage discharge.

The present invention is also directed to a fuel cell including such an air purifying apparatus. A fuel cell using an ozone generating means as the first pollutant-removing means preferably includes the following. A blower takes outside air into an air supply route, and a dust removal filter is located upstream or downstream of the blower for removing dust in the air. An ozone generating discharge element is located downstream of the blower for generating ions, as well as ozone, to cause dust in the air to carry an electric charge. A dust collector is located downstream of the discharge element, and the dust collector carries an electric charge opposite to the electric charge of the dust given by the discharge element for adsorbing the dust. A pollutant-removing means is located downstream of the discharge element for oxidizing a pollutant in the air by reacting the ozone with the pollutant and for adsorbing and removing the oxidized pollutant.

### EMBODIMENT 1

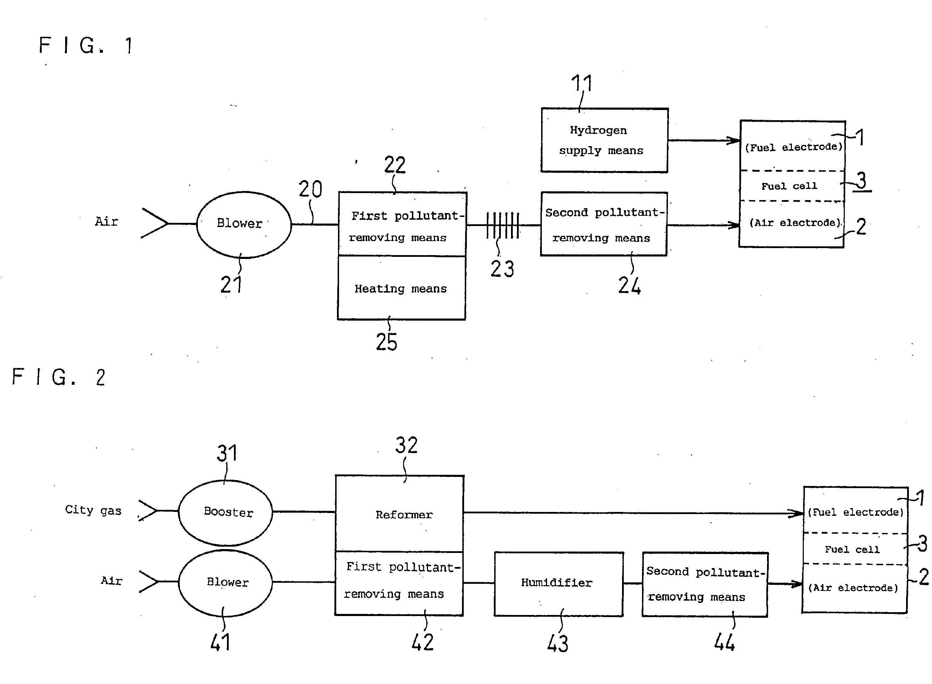

FIG. 1 is a block diagram of a fuel cell including a typical air purifying apparatus according to the present invention.

A fuel cell 3 has a fuel supply means 11, which supplies hydrogen gas (fuel) to a fuel electrode 1, as well as a blower 21, which sucks air from the atmosphere and supplies the air to an air electrode (oxidant electrode) 2. Fuel electrode 1 serves as an anode and air electrode 2 serves as a cathode. The fuel supply means 11 is, for example, a hydrogen cylinder. An air flow route 20, which extends from the blower 21 to the air electrode of the fuel cell, is provided with a first pollutant-removing means 22, an air-cooled tube 23, and a second pollutant-removing means 24, in this order. The first pollutant-removing means 22 includes a catalyst. It is preferable that the first pollutant-removing means 22 include a heating means 25, which may be a heater, and that the catalyst be heated to 200 to 500 °C. The air-cooled tube 23 cools the air heated in the first pollutant-removing means 22.

The first pollutant-removing means 22 oxidizes pollutants by making the pollutants combine with oxygen in the air, using a catalyst. As the catalyst, it is effective to use noble metal, such as palladium, platinum, ruthenium, and rhodium, which has an oxidizing activity with respect to organic substances, nitrogen oxides, sulfur oxides, ammonia, hydrogen sulfide, carbon monoxide, etc. By placing such noble metal on the surface of a metal or a porous carrier made of alumina, zirconia or the like, the noble metal can be utilized effectively. A catalyst obtained by placing a noble metal on a porous carrier or a metal is shaped into pellets or a honey-comb, and the resultant catalyst is put into a container. By passing the air through the container, low-oxidized pollutants in the air can be oxidized to a higher degree. For example, NO and ammonia are oxidized to NO₂, SO and hydrogen sulfide to SO₂, and organic substances and CO to CO₂.

The first pollutant-removing means can reduce the kinds of pollutants significantly and remove pollutants, such as NO, that are difficult to be adsorbed and removed.

The above-described catalysts exert sufficient oxidizing ability when heated to 200 to 500 °C. However, when the concentrations of the pollutants are low or when the amount of air to be passed through the container having the catalyst is small relative to the amount of the catalyst, the catalysts may be used at room temperature.

The second pollutant-removing means adsorbs and removes the highly oxidized pollutants that are oxidized by the first pollutant-removing means or that have passed through the first pollutant-removing means. The second pollutant-removing means includes a porous material carrying at least one selected from the group consisting of permanganates, alkali salts, alkaline hydroxides, and alkaline oxides.

As the porous material, it is effective to use activated carbon, alumina, zeolite, zirconia and silica. Permanganates may be potassium permanganate and sodium permanganate. Alkali salts may be K₂CO₃, Na₂CO₃, NaHCO₃, and CaCO₃. Alkaline hydroxides may be KOH, NaOH, Ca(OH)₂, and Mg(OH)₂. Alkaline oxides may be K₂O, Na₂O, CaO, and MgO.

Although any combination of the above-listed materials may be effective in removing various pollutants, alumina carrying potassium permanganate is particularly effective in removing nitrogen oxides. With respect to sulfur oxides, alumina carrying potassium permanganate and zeolite carrying an alkaline hydroxide are effective.

When the air purifying apparatus according to the present invention is operated, it is desirable that the space velocity (SV) of the air to be purified be 10,000 to 100,000 h⁻¹. The higher the SV, the smaller the adsorbing device can be made. However, if the adsorbing performance of the adsorbent is poor, sufficient purification is not possible, unless the SV is made low. In fuel cell applications where a large amount of air needs to be purified, if the SV is low, the adsorbing device becomes large and the pressure loss increases, so that the power consumption of the blower increases. The increase in the power consumption of the blower results in a decrease in power generating efficiency of the power generating system using a fuel cell.

The present invention can purify air effectively even under the condition of high space velocity of about 10,000 to 100,000 h⁻¹, by employing a configuration that includes a first pollutant-removing means, which has an oxidizing catalyst, and a second pollutant-removing means, which adsorbs and removes highly oxidized pollutants.

### EMBODIMENT 2

The first pollutant-removing means exhibits a higher activity to oxidize pollutants when heated to a higher temperature. The first pollutant-removing means may be heated by a heater or the like as in Embodiment 1, but this method is not economical, because it involves power consumption. Instead, the heating may be performed by utilizing the waste heat from a reformer of a fuel cell system or a fuel cell. In this case, the pollutants can be removed economically.

FIG. 2 is a block diagram of a pollutant-removing means utilizing the waste heat from a reformer of a fuel cell system. The pressure of city gas (fuel) is heightened by a booster 31. The city gas is then fed to a reformer 32, where steam is added to the city gas to generate hydrogen. The hydrogen generated in the reformer 32 is supplied to the fuel electrode 1 (anode) of the fuel cell 3. The reformer 32 is heated to about 600 °C by a burner which burns part of the fuel, so there is waste heat. By utilizing this waste heat, the first pollutant-removing means can be heated up to about 400 °C.

Meanwhile, air supplied to the air electrode 2 (cathode) of the fuel cell 3 is taken in by a blower 41, and the pollutants in the air are oxidized by a first pollutant-removing means 42 connected to the reformer 32. The first pollutant-removing means 42 is heated by the waste heat from the reformer 32, so that the air is also heated to about 100 to 200 °C. The air is sent to a humidifier 43, where it is humidified while being cooled by the evaporation heat of the moisture. The moderately cooled air is fed to a second pollutant-removing means 44, where the pollutants are adsorbed and removed, and the air is then fed to the fuel cell.

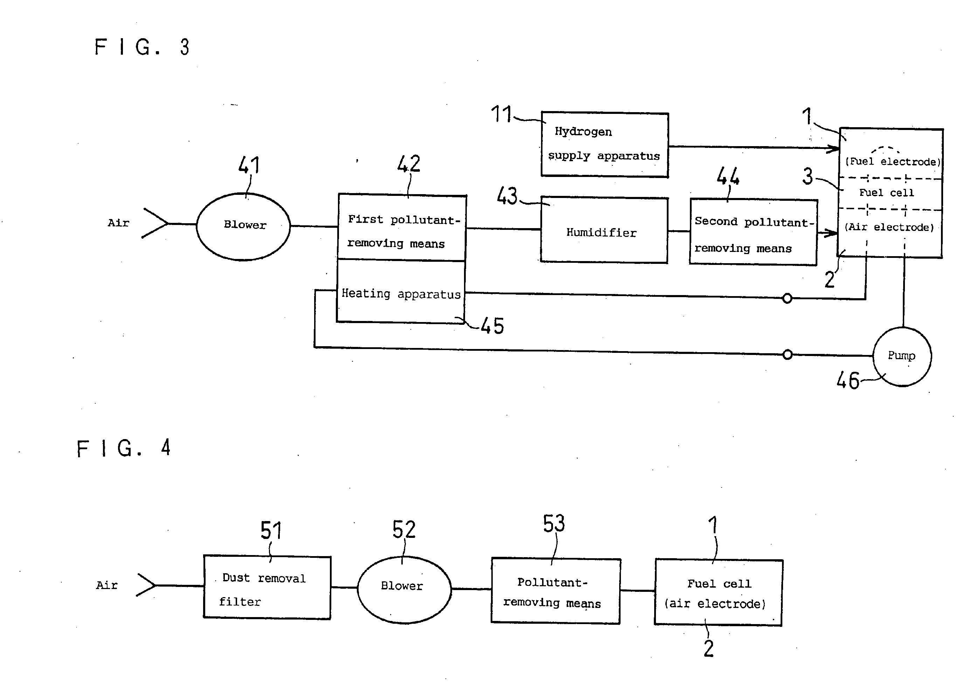

The heating of the first pollutant-removing means may be performed by utilizing the waste heat from the fuel cell, as well as the waste heat from the reformer. In the case of solid polymer electrolyte fuel cells, cooling water is passed through a cell stack in order to maintain the operating temperatures of about 70 to 80 °C. If the heated cooling water is used to heat the first pollutant-removing means, the first pollutant-removing means can be heated to about 70°C. FIG. 3 shows an example of using the cooling water which has been heated as the result of cooling a fuel cell, in order to heat the first pollutant-removing means 42. Cooling water is passed through the fuel cell by a pump 46, and then introduced into a heating apparatus 45 to heat the first pollutant-removing means 42. The heated cooling water is also introduced into a heat exchanger (not shown) that heats water contained in a hot water storage.

### EMBODIMENT 3

As the first pollutant-removing means, ozone may be used to oxidize the pollutants, and the oxidized pollutants may be adsorbed and removed by the second pollutant-removing means. According to this method, the pollutants can be oxidized effectively without heating the first pollutant-removing means.

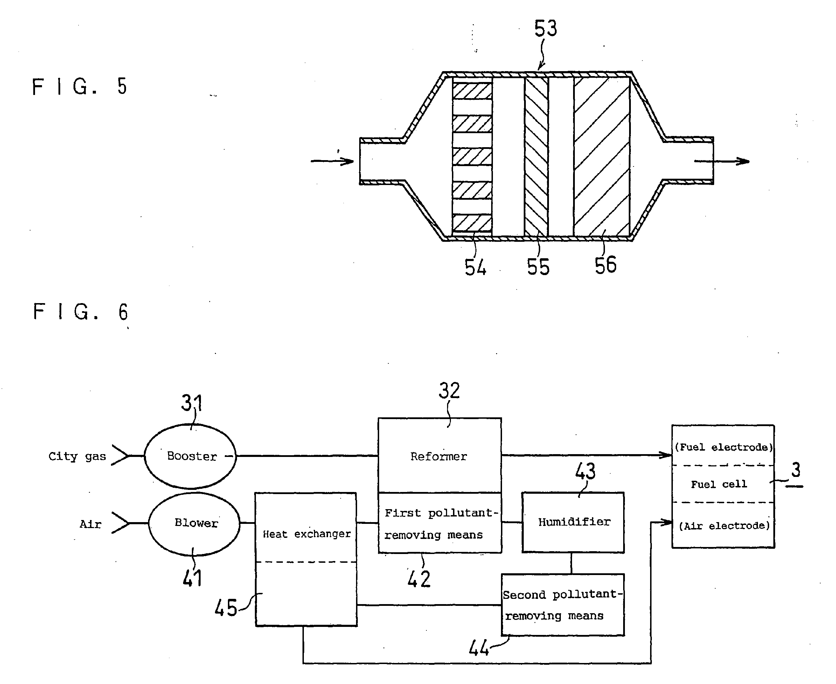

FIG. 4 is a block diagram of a pollutant-removing means utilizing ozone in this embodiment. Air is supplied to a fuel cell 1 through a dust removal filter 51, a blower 52 which takes in air, and a pollutant-removing means 53. In this embodiment, the first pollutant-removing means and the second pollutant-removing means are integrated into the pollutant-removing means 53. As illustrated in FIG. 5, the pollutant-removing means 53 consists of a discharge element 54, a dust collector 55, and a pollutant-adsorbing part 56.

The discharge element 54 is driven by high voltage or the like, and has a function of generating ozone. In this embodiment, an ozone generating electrode system of a creeping discharge type, which includes an induction electrode and a discharge electrode on an alumina substrate, is used as the discharge element 54.

The dust collector 55 is located downstream of the discharge element 54. In order to collect the dust carrying an electric charge that is given by the discharge element 54, the dust collector 55 is electrically driven so as to carry an electric charge that is opposite to the electric charge of the dust given by the discharge element 54.

The pollutant-adsorbing part 56 includes a porous carrier carrying at least one selected from the group consisting of permanganates, alkali salts, alkaline hydroxides, and alkaline oxides. The pollutant-adsorbing part 56 has a function of oxidizing the pollutants in the air by reacting the pollutants with ozone on the surface of the porous carrier, and a function of adsorbing and removing the oxidized pollutants. This pollutant-adsorbing part 56 is capable of oxidizing the pollutants even at room temperature by means of the highly reactive radical oxygen produced by the decomposition of ozone adsorbed onto the porous carrier. Further, since this part 56 also decomposes ozone, the inclusion of ozone into the fuel cell is prevented. If ozone enters the fuel cell, it corrodes and decomposes the components of the fuel cell, so ozone inclusion is not desirable.

### EMBODIMENT 4

In Embodiment 2, the high temperature air heated in the first pollutant-removing means is introduced into the humidifier, where it is humidified while being cooled. In this case, if the degree of humidification is excessive, condensation occurs in the second pollutant-removing means. The occurrence of condensation increases the pressure loss and destroys the second pollutant removing means. It is therefore desirable that the degree of humidification be low.

FIG. 6 shows a preferable embodiment in the case of increasing the degree of humidification. A heat exchanger 45 is interposed between the second pollutant-removing means 44 and the air electrode (cathode) of the fuel cell, and the air released from the humidifier 43 is cooled to optimum temperatures of the fuel cell by the heat exchanger 45. This configuration makes it possible to set the temperature of the second pollutant-removing means high, thereby preventing the condensation in the second pollutant-removing means.

The heat of the heat exchanger 45 can be utilized effectively, if the air from the blower 41 is passed through the heat exchanger 45 for heating.

### EMBODIMENT 5

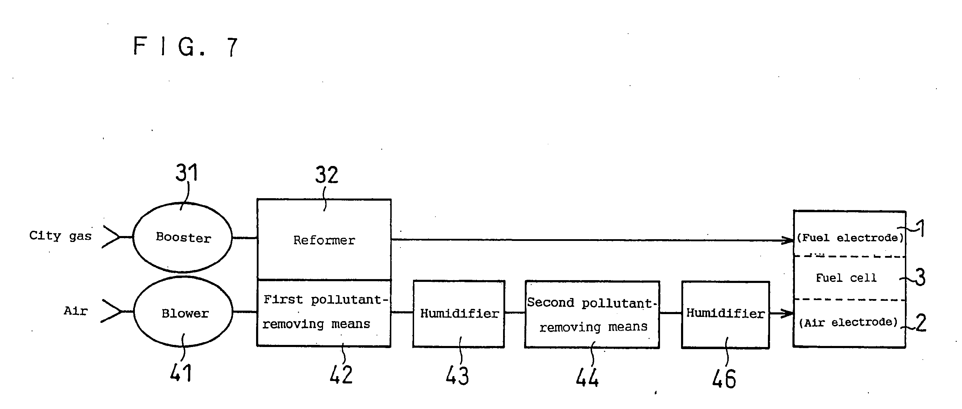

FIG. 7 shows a preferable embodiment which may be employed when the degree of humidification by the humidifier 43 is insufficient in the configuration of Embodiment 2. This is an example of further providing a second humidifier 46 between the second pollutant-removing means 44 and the fuel cell. This configuration makes it possible to prevent the condensation in the second pollutant-removing means and to supply humidified air to the fuel cell in a stable manner.

Examples of the present invention are specifically described below.

### EXAMPLE 1

As the first pollutant-removing means, 200 ml of pelletized alumina carrying palladium (KD301 manufactured by Tanaka Kikinzoku Kogyo K.K.) was put into a cylindrical container made of stainless steel. A heater was installed around the container, and the container was heated to 350°C. An inlet tube and an outlet tube were connected to the upper and lower parts of the cylindrical container, respectively.

As the second pollutant-removing means, 600 ml of a mixture of pelletized alumina carrying potassium permanganate and pelletized activated carbon (CP Blend Select manufactured by Nitta Corporation) was put into a cylindrical container made of stainless steel. An inlet tube and an outlet tube were connected to the upper and lower parts of the cylindrical container, respectively.

An air purifying apparatus of this example is so configured that the air discharged from the first pollutant-removing means is cooled to around room temperature by an air-cooled tube and then fed to the second pollutant-removing means. To this air purifying apparatus, air was fed at 6,000 L per hour by a blower, to purify the air.

The air before being introduced into the air purifying apparatus contained 50 ppb of NOₓ, 10 ppb of SOₓ, and 1 ppm of CO, as pollutants. However, after this air was purified by the air purifying apparatus of the present invention, all of these pollutants were successfully reduced to 1 ppb or less (below minimum limit of detection). The SV in the first pollutant-removing means was about 30,000 h⁻¹, and the SV in the second pollutant-removing means was about 10,000 h⁻¹.

Also, on the assumption that pollutants are produced around the installation site of a fuel cell, 1 ppm of ammonia, 1 ppm of hydrogen sulfide, and 1 ppm of toluene (organic matter) were added to air as pollutants, and this air was purified by the air purifying apparatus of the present invention. As a result, all the pollutants were successfully reduced to 1 ppb or less (below minimum limit of detection).

When the first pollutant-removing means was operated at room temperature without being heated by the heater, its toluene removing power lowered slightly, so that about 5 ppb of toluene was detected on the outlet side. When the concentration of toluene was decreased to 0.1 ppm, toluene was not detected on the outlet side.

Thereafter, the air purified by the air purifying apparatus of the present invention was supplied to a fuel cell. The fuel cell was produced as follows. A 12-cm square membrane electrode assembly (MEA) (PRIMEA produced by Japan Gore-Tex, Inc.) was sandwiched between separator plates produced by cutting a gas flow channel in a graphite plate. Then, 80 such cells were stacked to produce a fuel cell stack.

The temperature of the stack was set at 70°C, and hydrogen gas was humidified to a dew point of 70°C. This hydrogen gas was supplied as an active material to the fuel electrode (anode) in an amount such that its utilization rate was 80% at a current density of 200 mA/cm². The air purified by the air purifying apparatus of the present invention was humidified to a dew point of 70°C and supplied to the oxidant electrode. The supply amount of the air was 6,000 L/h. This was an amount such that its utilization rate was 40% at a current density of 200 mA/cm². Under these conditions, the fuel cell was operated to generate power at a current density of 200 mA/cm².

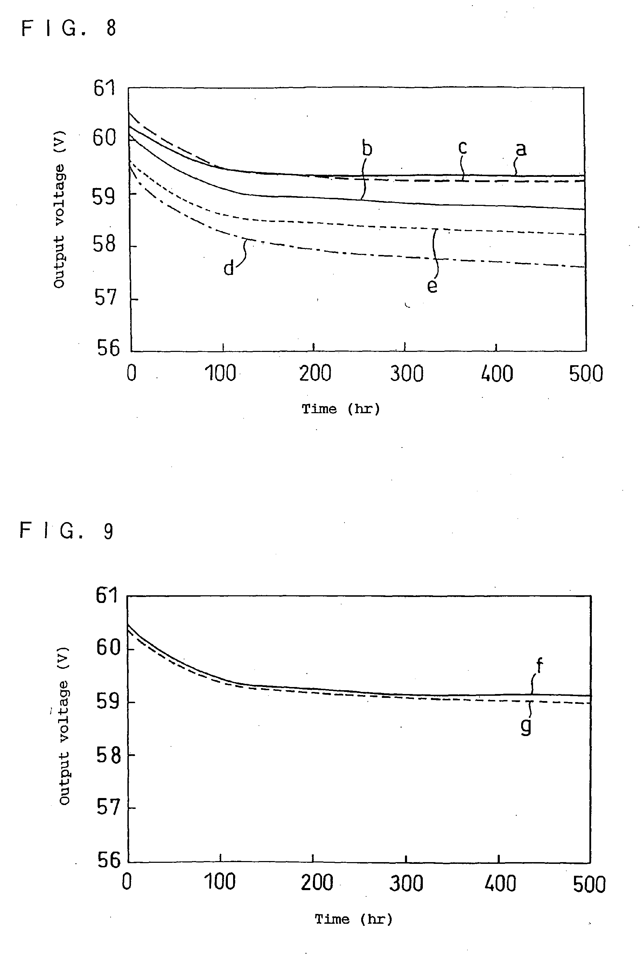

FIG. 8 shows the change with time in output voltage of the fuel cell "a" of this example, plus the change with time in output voltage of the fuel cell "d" of Comparative Example 1 not using an air purifying apparatus. FIG. 8 indicates that the fuel cell of this example can maintain high output voltage in comparison with the fuel cell of Comparative Example 1.

Further, the fuel cell of this Example was also able to maintain high output voltage even when 1 ppm of ammonia, 1 ppm of hydrogen sulfide, and 1 ppm of toluene (organic matter) were added to air as pollutants.

In this example, pelletized alumina carrying palladium was used as the first pollutant-removing means, but the same results was obtained from the use of platinum in place of palladium (KT301 manufactured by Tanaka Kikinzoku Kogyo K.K.). Also, the use of ruthenium or rhodium in place of palladium (a custom-made article manufactured by Tanaka Kikinzoku Kogyo K.K.) produced similar results, except that about 10 ppb of toluene was detected on the outlet side because of a slight decrease in toluene removing power.

### COMPARATIVE EXAMPLE 1

A fuel cell stack was produced in the same manner as in Example 1. The fuel cell stack was operated to generate power without using an air purifying apparatus under the same conditions as those of Example 1. FIG. 8 shows the change with time in output voltage of the fuel cell "d" of Comparative Example 1. The output voltage was lower than that of Example 1, and lowered with the passage of time.

### COMPARATIVE EXAMPLE 2

A fuel cell "e", which used only the second pollutant-removing means of Example 1 as the pollutant-removing means, was operated to generate power under the same conditions as those of Example 1. The air before being introduced into the air purifying apparatus contained 50 ppb of NOₓ, 10 ppb of SOₓ, and 1 ppm of CO, as pollutants. At the outlet of the pollutant-removing means, the air contained 40 ppb of NOₓ and 5 ppb of SOₓ. As shown in FIG 8, the output voltage was lower than that of Example 1, and lowered with the passage of time.

### EXAMPLE 2

As the first pollutant-removing means, 277 ml of a honey-comb-shaped Fe-Cr-Al alloy carrying palladium (MH80A manufactured by Tanaka Kikinzoku Kogyo K.K.) was put into a cylindrical container made of stainless steel. A heater was installed around the container, and the container was heated to 200°C. An inlet tube and an outlet tube were connected to the upper and lower parts of the cylindrical container, respectively.

As the second pollutant-removing means, 600 ml of a honey-comb-shaped mixture of calcium hydroxide, potassium carbonate, calcium sulfate, and activated carbon (NC honey-comb manufactured by Nagamine Manufacturing Co., Ltd.) was put into a rectangular container made of stainless steel. An inlet tube and an outlet tube were connected to the upper and lower parts of the container, respectively.

An air purifying apparatus of this example is so configured that the air discharged from the first pollutant-removing means is cooled to around room temperature by an air-cooled tube and then fed to the second pollutant-removing means. To this air purifying apparatus, air was fed by a blower in the same manner as in Example 1, to purify the air. As a result, all the air pollutants, NOₓ, SOₓ, and CO, were successfully reduced to 1 ppb or less (below minimum limit of detection).

### EXAMPLE 3

In the configuration of Embodiment 2 of FIG. 2, air was supplied to a fuel cell.

As the first pollutant-removing means, 200 ml of pelletized alumina carrying palladium (KD301 manufactured by Tanaka Kikinzoku Kogyo K.K.) was put into a rectangular container made of stainless steel. This container was placed so as to contact a reformer such that it can be heated by the waste heat from the reformer. Air was supplied to the inlet of this container by a blower at 6,000 L per hour. The temperature of the air at the outlet reached 150°C.

The air discharged from the first pollutant-removing means was fed into a humidifier, where it was humidified and cooled. The humidifier was equipped with a spongy porous material, made of stainless steel, which sucked up water, and the air was passed through the spongy porous material for humidification. By the humidifier, the air was humidified so as to have a dew point of 60°C, and the temperature of the air was lowered to 80°C.

As the second pollutant-removing means, 600 ml of a mixture of pelletized alumina carrying potassium permanganate and pelletized activated carbon (CP Blend Select manufactured by Nitta Corporation) was put into a cylindrical container made of stainless steel. An inlet tube and an outlet tube were connected to the upper and lower parts of the container, respectively.

The air before being introduced into the air purifying apparatus contained 50 ppb of NOₓ, 10 ppb of SOₓ, and 1 ppm of CO, as pollutants. However, at the outlet of the second pollutant-removing means, all of these pollutants were successfully reduced to 1 ppb or less (below minimum limit of detection).

In the same manner as in Example 1, a fuel cell was produced, and the purified air was supplied to the fuel cell to generate power.

FIG. 8 shows the change with time in output voltage of the fuel cell "b" of this example. In the same manner as in Example 1, the fuel cell "b" was able to maintain high output voltage.

### EXAMPLE 4

In the configuration of Embodiment 3 of FIG. 4, air was supplied to a fuel cell.

As illustrated in FIG. 5, a discharge element 54, a dust collector 55, and a pollutant-adsorbing part 56 were installed in a cylindrical container made of stainless steel.

An ozone generating electrode system of a creeping discharge type, including an induction electrode and a discharge electrode on an alumina substrate, was used as the discharge element 54, and a voltage of 30,000 volts was applied thereto. The dust collector 55 was polypropylene mesh coated with a conductive carbon paint, to which a grounding earth of a power circuit for applying voltage to the discharge element 54 was connected.

The pollutant-adsorbing part 56 was a honey-comb-shaped mixture of potassium hydroxide, manganese dioxide, and activated carbon.
In the same manner as in Example 1, air was supplied at 6,000 L per hour. Immediately after the discharge element 54, the concentration of ozone was 0.3 ppm. At the outlet of the pollutant-adsorbing part, the concentration of remaining ozone was in a range of 0.01 to 0.03 ppm.

The air before being introduced into the air purifying apparatus contained 50 ppb of NOₓ, 10 ppb of SOₓ, and 1 ppm of CO, as pollutants. However, at the outlet of the pollutant-removing means, all of these pollutants were successfully reduced to 1 ppb or less (below minimum limit of detection).

In the same manner as in Example 1, a fuel cell was produced, and the purified air was supplied to the fuel cell to generate power.
FIG. 8 shows the change with time in output voltage of the fuel cell "c" of this example. In the same manner as in Example 1, the fuel cell "c" was able to maintain high output voltage.

### EXAMPLE 5

In the configuration of Embodiment 4 of FIG. 6, air was supplied to a fuel cell.

The first and second pollutant-removing means and the humidifier were the same as those of Example 3. As the heat exchanger, a pair of stainless steel flow channels were provided so as to come in contact with each other, and therefore, so as to exchange heat with each other.

The air purifying apparatus was operated under the same conditions as those of Example 3. At the inlet of the air electrode (cathode) of the fuel cell, the air had a dew point of 65°C and a temperature of 70°C. The air before being introduced into the air purifying apparatus contained 50 ppb of NOₓ, 10 ppb of SOₓ, and 1 ppm of CO, as pollutants. However, after the passage through the second pollutant-removing means, all of these pollutants in the air were successfully reduced to 1 ppb or less (below minimum limit of detection).

In the same manner as in Example 1, a fuel cell was produced, and the purified air was supplied to the fuel cell to generate power.
FIG. 9 shows the change with time in output voltage of the fuel cell "f" of this example. In the same manner as in Example 1, the fuel cell "f" was able to maintain high output voltage.

### EXAMPLE 6

In the configuration of Embodiment 5 of FIG. 7, air was supplied to a fuel cell.

The first and second pollutant-removing means and the humidifier were the same as those of Example 3. As the second humidifier, two flow channels were provided on opposite sides of a polymer electrolyte membrane (Nafion 117 manufactured by E.I. Du Pont de Nemours & Co. Inc.), and the air released from the second pollutant-removing means was flown through one of the flow channels, and the heated cooling water was flown through the other flow channel.

The air purifying apparatus was operated under the same conditions as those of Example 3. At the inlet of the air electrode (cathode) of the fuel cell, the air had a dew point of 70°C and a temperature of 70°C. The air before being introduced into the air purifying apparatus contained 50 ppb of NOₓ, 10 ppb of SOₓ, and 1 ppm of CO, as pollutants. However, after the passage through the second pollutant-removing means, all of these pollutants in the air were successfully reduced to 1 ppb or less (below minimum limit of detection).

In the same manner as in Example 1, a fuel cell was produced, and the purified air was supplied to the fuel cell to generate power. FIG. 9 shows the change with time in output voltage of the fuel cell "g" of this example. In the same manner as in Example 1, the fuel cell "g" was able to maintain high output voltage.
As described above, the present invention can remove pollutants in air effectively. Therefore, the present invention is useful for fuel cells that take in air as an oxidant.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A method of operating a fuel cell using an air-containing fluid as a reactant,
**characterized in that**
air contained in said oxidant is purified, said purification including the steps of
oxidizing a pollutant and
adsorbing and/or removing an oxidized pollutant.

2. A method of operating a fuel cell using an air-containing fluid as a reactant, particularly according to claim 1, including the steps of
loading dust particles with an electric charge of a first polarity and
loading a dust collector with an electric charge of a second polarity, opposite to said first polarity.

3. An air purifying apparatus for a fuel cell, **characterized by**
a first purifying means that oxidizes a pollutant in the air and
a second purifying means that adsorbs and/or removes an oxidized pollutant.

4. The apparatus according to claim 3, adapted to be provided on a flow route of air supplied to the fuel cell.

5. The apparatus according to claim 3 or 4, wherein said first purifying means includes a catalyst that oxidizes the pollutant by means of oxygen in the air, and said catalyst has an oxidizing activity with respect to at least one selected from the group consisting of organic substances, nitrogen oxides, sulfur oxides, ammonia, hydrogen sulfide, and carbon monoxide.

6. The apparatus according to any of claims 3 to 5, wherein said first purifying means includes an ozone generator that generates ozone, and the pollutant is oxidized by the ozone generated by said ozone generator.

7. The apparatus according to any of claims 3 to 6, wherein said second purifying means adsorbs and/or removes the pollutant by means of a porous material carrying at least one selected from the group consisting of permanganates, alkali salts, alkaline hydroxides, and alkaline oxides.

8. An air purifying apparatus for a fuel cell, particularly according to any of claims 3 to 7, **characterized by**
means for loading dust particles with an electric charge of a first polarity and
a dust collector loaded with an electric charge of a second polarity, opposite to said first polarity.

9. A fuel cell, comprising an air electrode and
- being adapted to be operated according to claim 1 or 2, and/or
- comprising an air purifying apparatus according to any of claims 3 to 8.

10. A fuel cell comprising an air electrode, **characterized by**
an air purifying apparatus comprising
a first purifying means that oxidizes a pollutant in the air and
a second purifying means that adsorbs and/or removes an oxidized pollutant.

11. The fuel cell according to claim 9 or 10, **characterized in that** said air purifying apparatus is provided on a flow route of air supplied to the fuel cell.

12. The fuel cell according to any of claims 9 to 11, wherein said first purifying means includes a catalyst that oxidizes the pollutant by means of oxygen in the air, and said catalyst has an oxidizing activity with respect to at least one selected from the group consisting of organic substances, nitrogen oxides, sulfur oxides, ammonia, hydrogen sulfide, and carbon monoxide.

13. The fuel cell according to any of claims 9 to 12, wherein said catalyst is at least one selected from the group consisting of Pd, Pt, Ru, and Rh.

14. The fuel cell according to any of claims 9 to 13, further comprising a heating means for heating said first purifying means, wherein a fuel supply means includes a reformer, and said heating means heats said first purifying means by utilizing waste heat from said reformer.

15. The fuel cell according to claim 14, wherein said reformer is adapted to reform city gas.

16. The fuel cell according to any of claims 9 to 15, further comprising a heating means for heating said first purifying means and a means for circulating cooling water through said fuel cell to cool said fuel cell, wherein said heating means heats said first purifying means by utilizing the cooling water which has been heated as a result of heat exchange with the fuel cell.

17. The fuel cell according to any of claims 9 to 16, wherein said first purifying means includes an ozone generator that generates ozone, and the pollutant is oxidized by the ozone generated by said ozone generator.

18. The fuel cell according to any of claims 9 to 17, wherein said second purifying means adsorbs and/or removes the pollutant by means of a porous material carrying at least one selected from the group consisting of permanganates, alkali salts, alkaline hydroxides, and alkaline oxides.

19. The fuel cell according to any of claims 9 to 18, wherein said porous material is at least one selected from the group consisting of activated carbon, alumina, zeolite, and silica.

20. The fuel cell according to any of claims 9 to 19, wherein said first purifying means includes an ozone generating discharge element that generates ions, as well as ozone, to cause dust in the air to carry an electric charge, a dust collector is provided downstream of said discharge element, and said dust collector carries an electric charge of a polarity opposite to the polarity of the electric charge of said dust given by said discharge element for adsorbing said dust.

21. The fuel cell according to any of claims 9 to 20, wherein an air supply means includes a blower for taking outside air into an air supply route, and said air purifying apparatus comprises: a dust removal filter located upstream or downstream of said blower for removing dust in said air; an ozone generating discharge element located downstream of said blower for generating ions, as well as ozone, to cause dust in said air to carry an electric charge; and a dust collector located downstream of said discharge element, said dust collector carrying an electric charge of a polarity opposite to the polarity of the electric charge of said dust given by said discharge element for adsorbing said dust; said air purifying apparatus being located downstream of said discharge element, for oxidizing a pollutant in said air by reacting said ozone with the pollutant and for adsorbing and/or removing the oxidized pollutant.

22. The fuel cell according to any of claims 9 to 21, **characterized in that** an air electrode is a cathode and a fuel electrode is an anode.
